# EUROPÄISCHE PATENTSCHRIFT

(11) **EP 3 517 181 B1**
(45) Veröffentlichungstag und Bekanntmachung des Hinweises auf die Patenterteilung: **30.09.2020**
(21) Anmeldenummer: 18153644.2
(22) Anmeldetag: 26.01.2018
(51) Int. Cl.: A62B 33/00

(54) **LAWINENAIRBAGSYSTEM, TRAGEINRICHTUNG UND VERFAHREN ZUM BETREIBEN EINES LAWINENAIRBAGSYSTEMS**
AVALANCHE AIR BAG SYSTEM, SUPPORT DEVICE AND METHOD FOR OPERATING AN AVALANCHE AIRBAG SYSTEM
SYSTÈME DE COUSSIN GONFLABLES D'AVALANCHE, DISPOSITIF D'USURE ET PROCÉDÉ DE FONCTIONNEMENT D'UN SYSTÈME DE COUSSIN GONFLABLES D'AVALANCHE

(43) Veröffentlichungstag der Anmeldung: 31.07.2019
(73) Patentinhaber: Ortovox Sportartikel GmbH, 82024 Taufkirchen (DE)
(72) Erfinder: Bier, Christian, 93714 Miesbach (DE)
(74) Vertreter: Hofstetter, Schurack & Partner

(56) Entgegenhaltungen:
- EP-A1- 3 202 462
- US-A1- 2013 149 924

## Beschreibung

Die Erfindung betrifft ein Lawinenairbagsystem, welches einen Airbag und eine Befüllvorrichtung zum Einbringen von Umgebungsluft in den Airbag umfasst. Die Befüllvorrichtung umfasst ein Gebläse mit einem Elektromotor, einen ersten elektrischen Energiespeicher zum Versorgen des Elektromotors mit elektrischer Energie, einen zweiten elektrischen Energiespeicher und eine Steuerungseinrichtung zum Ansteuern des Elektromotors. Des Weiteren betrifft die Erfindung eine Trageinrichtung mit einem solchen Lawinenairbagsystem und ein Verfahren zum Betreiben eines solchen Lawinenairbagsystems.

Derzeit sind Lawinenairbagsysteme verbreitet, bei welchen eine mit unter Druck stehendem Gas gefüllte Kartusche zum Befüllen beziehungsweise Aufblasen des Airbags verwendet wird. Bei einem durch einen Nutzer des Lawinenairbagsystems bewirkten Auslösen des Lawinenairbagsystems wird ein Verschluss der Kartusche durchstoßen, und das in der Kartusche enthaltene Gas strömt in den Airbag ein. Hierbei kann über eine Venturi-Einrichtung, durch welche das Gas strömt, zusätzlich Umgebungsluft angesaugt und zusammen mit dem Gas aus der Kartusche in den Airbag eingebracht werden.

Als nachteilig ist bei derartigen Lawinenairbagsystemen der Umstand anzusehen, dass eine Mehrfachauslösung nicht möglich ist. Des Weiteren erlauben Lufttransportvorschriften in einigen Ländern keine Mitnahme von gefüllten Kartuschen. Es ist auch nicht auszuschließen, dass in Zukunft auch für noch mehr Länder strengere Transportvorschriften im Hinblick auf das Mitführen von Gaskartuschen gelten werden. Denn das Gas in der Kartusche derzeit erhältlicher Lawinenairbagsysteme steht unter einem Druck von bis zu 300 bar.

Als alternative Lawinenairbagsysteme sind daher seit einigen Jahren auch solche mit einer elektrisch betriebenen Befüllvorrichtung erhältlich. Hierbei sorgt ein sehr leistungsfähiges Gebläse mit einem Elektromotor dafür, dass der Airbag innerhalb einer Zeitspanne von 5 Sekunden nach der Auslösung mit Umgebungsluft gefüllt wird. Der Elektromotor wird von einem elektrischen Energiespeicher der Befüllvorrichtung mit Strom versorgt.

Herkömmliche elektrische Energiespeicher in Form von Lithium-Ionen-Akkumulatoren verlieren jedoch bei Temperaturen von weniger als -10 Grad Celsius signifikant an Leistung, und bei Temperaturen von unter -20 Grad Celsius ist eine Funktionstüchtigkeit derartiger elektrischer Energiespeicher kaum noch gegeben.

Aufgrund der hohen Anforderungen an die Auslösesicherheit eines Lawinenairbagsystems, welche auch bei Temperaturen von bis zu -30 Grad Celsius gewährleistet werden muss, werden als Lithium-Ionen-Akkumulatoren ausgebildete Energiespeicher daher sehr viel größer dimensioniert, als dies bei gemäßigten Temperaturen erforderlich wäre. Dies führt dazu, dass das Lawinenairbagsystem sehr schwer wird aber dennoch bei sehr tiefen Temperaturen anfällig für Probleme bleibt. Zusätzlich ist das Vorsehen von großen Lithium-Ionen-Akkumulatoren sehr kostenintensiv.

Die EP 3 202 462 A1 beschreibt ein Lawinenairbagsystem mit einer elektrisch betriebenen Aufblasvorrichtung, wobei zum Versorgen eines Gebläses der Aufblasvorrichtung Kondensatoren in Form von Superkondensatoren oder Ultrakondensatoren zum Einsatz kommen. In der EP 3 202 462 A1 ist angegeben, dass derartige Kondensatoren auch bei extremen Temperaturbedingungen in einem Bereich von -30 Grad Celsius bis 50 Grad Celsius nicht anfällig sind im Hinblick auf das Bereitstellen von elektrischer Energie für einen Elektromotor des Gebläses. Zum Wiederaufladen der Kondensatoren kann die in der EP 3 202 462 A1 beschriebene Aufblasvorrichtung eine Batterie umfassen. Das Aufblasen des Airbags wird jedoch immer und ausschließlich mit der elektrischen Energie aus den Kondensatoren bewerkstelligt.

Als nachteilig ist hierbei der Umstand anzusehen, dass Kondensatoren eine vergleichsweise rasche Selbstentladung zeigen. Ist das Lawinenairbagsystem der EP 3 202 462 A1 somit längere Zeit nicht in Gebrauch, so kann es kritisch werden, mit der in den Kondensatoren verbleibenden elektrischen Energie das Befüllen des Airbags sicherzustellen.

Die US 2013149924 A1 beschreibt Lawinenairbagsystem mit einem Aufblassystem, welches ein Gebläse, eine wieder aufladbare Batterie und ein Steuergerät umfasst.

Aufgabe der vorliegenden Erfindung ist es daher, ein Lawinenairbagsystem der eingangs genannten Art im Hinblick auf die Auslösesicherheit zu verbessern, eine Trageinrichtung mit einem solchen Lawinenairbagsystem bereitzustellen, und ein entsprechend verbessertes Verfahren zu schaffen.

Diese Aufgabe wird durch ein Lawinenairbagsystem mit den Merkmalen des Patentanspruchs 1, eine Trageinrichtung mit den Merkmalen des Patentanspruchs 13 und ein Verfahren mit den Merkmalen des Patentanspruchs 14 gelöst. Vorteilhafte Ausgestaltungen mit zweckmäßigen Weiterbildungen der Erfindung sind in den abhängigen Patentansprüchen angegeben.

Das erfindungsgemäße Lawinenairbagsystem umfasst wenigstens einen Airbag und eine Befüllvorrichtung zum Einbringen von Umgebungsluft in den Airbag. Die Befüllvorrichtung umfasst wenigstens ein Gebläse mit einem Elektromotor, einen ersten elektrischen Energiespeicher zum Versorgen des Elektromotors mit elektrischer Energie, um das Aufblasen des Airbags mit Umgebungsluft zu bewirken, einen zweiten elektrischen Energiespeicher, und eine Steuerungseinrichtung. Die Steuerungseinrichtung ist zum Ansteuern des Elektromotors ausgebildet. Mittels der Steuerungseinrichtung ist in Abhängigkeit von wenigstens einem Parameter sowohl ein Beaufschlagen des Elektromotors mit aus beiden Energiespeichern stammender elektrischer Energie als auch mit nur aus einem der beiden Energiespeicher stammender elektrischer Energie bewirkbar. Die Steuerungseinrichtung legt also fest, ob in Abhängigkeit von dem wenigstens einen Parameter die elektrische Energie zum Versorgen des Elektromotors aus einem der Energiespeicher oder aus beiden Energiespeichern bezogen werden soll, wenn die Steuerungseinrichtung den Elektromotor ansteuert.

Durch das Vorsehen der wenigstens zwei elektrischen Energiespeicher, welche somit wahlweise alleine oder zusammen zum Versorgen des Elektromotors mit elektrischer Energie eingesetzt werden können, ist eine besonders hohe Redundanz geschaffen. Damit ist das Lawinenairbagsystem auch im Hinblick auf die Auslösesicherheit verbessert.

Insbesondere, wenn beide elektrische Energiespeicher zum Versorgen des Elektromotors mit elektrischer Energie genutzt werden, erlaubt das durch die Steuerungseinrichtung bewirkbare Zuschalten des zweiten elektrischen Energiespeichers, dass beim Befüllen des Airbags mit der Umgebungsluft auftretende Spitzenlasten des Elektromotors besonders gut abgedeckt werden können. Der zweite elektrische Energiespeicher kann somit auch als Entlastungselement bezeichnet werden.

Vorzugsweise ist die Steuerungseinrichtung dazu ausgebildet, in Abhängigkeit von einem Eingeschaltet-Werden des Elektromotors das Beaufschlagen des Elektromotors mit aus beiden Energiespeichern stammender elektrischer Energie zu bewirken. Dem liegt die Erkenntnis zugrunde, dass insbesondere unmittelbar nach dem Einschalten des Elektromotors von den Energiespeichern eine sehr große Leistung bereitzustellen ist. Denn gerade zu Beginn des Befüllvorgangs ist eine entsprechend hohe Leistung des Gebläses erforderlich, um den Airbag aus einer diesen umschließenden Hülle heraus zu befördern, welche bei Anordnung des Lawinenairbagsystems an einer Trageinrichtung wie einem Rucksack auch als Airbagtasche bezeichnet wird. Es muss nämlich von dem Gebläse die Energie aufgebracht werden, um diese Airbagtasche zu öffnen und den Airbag aus der Airbagtasche auszubringen. Hierfür ist es sinnvoll, wenn der Elektromotor aus beiden elektrischen Energiespeichern stammende elektrische Energie bezieht.

Des Weiteren ist beim Befüllen des Airbags sicherzustellen, dass dieser zunächst mit maximaler Leistung so weit aufgeblasen wird, dass der Airbag ein bestimmtes von der Umgebungsluft eingenommenes Volumen aufweist. Auch hier ist die Nutzung der elektrischen Energie beider Energiespeicher zum Versorgen des Elektromotors vorteilhaft. Darüber hinaus ist gerade beim Anlaufen des Gebläses von dem Elektromotor eine besonders hohe Leistung bereitzustellen.

Und es kann steuerungstechnisch beziehungsweise regelungstechnisch besonders einfach umgesetzt werden, dass die Steuerungseinrichtung immer dann das Beaufschlagen des Elektromotors mit aus beiden Energiespeichern stammender elektrischer Energie bewirkt, wenn der Elektromotor eingeschaltet wird. Folglich lässt sich der Airbag beziehungsweise Lawinenairbag verbessert befüllen. Das Einschalten des Elektromotors kann insbesondere durch Betätigen einer Betätigungseinrichtung oder Auslöseeinrichtung des Lawinenairbagsystems bewirkt werden. So kann etwa infolge eines Ziehens an einem Auslösegriff die Steuerungseinrichtung ein Signal empfangen und daraufhin den Elektromotor einschalten.

Vorzugsweise ist die Steuerungseinrichtung zusätzlich oder alternativ dazu ausgebildet, in Abhängigkeit vom Überschreiten eines vorbestimmten Schwellenwerts einer von dem Elektromotor beim Befüllen des Airbags abzugebenden Leistung das Beaufschlagen des Elektromotors mit aus beiden Energiespeichern stammender elektrischer Energie zu bewirken. Es kann also die von dem Elektromotor bereitzustellende Soll-Leistung bei der Entscheidung durch die Steuerungseinrichtung berücksichtigt werden, ob beide Energiespeicher den Elektromotor mit elektrischer Energie versorgen sollen oder nur einer der Energiespeicher. Auf diese Weise können beim Befüllen des Airbags auftretende Spitzenlasten besonders gut abgedeckt werden. Des Weiteren kann so sichergestellt werden, dass bei allen Bedingungen die hohe Leistung der Energiespeicher für den Elektromotor zur Verfügung steht.

Vorzugsweise ist zumindest einer der beiden Energiespeicher als nicht wieder aufladbare Batterie ausgebildet. Dem liegt die Erkenntnis zugrunde, dass eine nicht als Akkumulator ausgebildete Batterie bei tiefen Temperaturen deutlich leistungsfähiger ist als eine wieder aufladbare Batterie, also ein Akkumulator. Auch durch die Verwendung der nicht wieder aufladbaren Batterie etwa als erster Energiespeicher lässt sich somit die Auslösesicherheit bei tiefen Temperaturen verbessern. Zudem können nach einer Auslösung des Lawinenairbags nicht wieder aufladbare Batterien problemlos und kostengünstig durch neue Batterien ersetzt werden. Des Weiteren kann auf ein aufwändiges und empfindliches Ladesystem zum Aufladen von als Akkumulatoren ausgebildeten Batterien verzichtet werden.

Vorzugsweise dient der erste Energiespeicher dem Versorgen der Steuerungseinrichtung und/oder weiterer elektronischer Komponenten mit elektrischer Energie. Dies ist insbesondere dann vorteilhaft, wenn der erste Energiespeicher als nicht wieder aufladbare Batterie oder als Akkumulator ausgebildet ist. Denn die zum Versorgen der Steuerungseinrichtung sowie weiterer elektronischer Komponenten, welche in einem Bereitschaftsmodus der Befüllvorrichtung aktiv sind, bereitzustellende Leistung ist vergleichsweise gering und insbesondere um ein Vielfaches geringer als die zum Betreiben des Elektromotors des Gebläses aufzubringende Energie. Wenn es also nicht gilt, Spitzenlasten abzudecken, sondern vielmehr die Befüllvorrichtung in dem Bereitschaftsmodus zu halten, ist es vorteilhaft, auf den als nicht wieder aufladbare Batterie oder Akkumulator ausgebildeten ersten Energiespeicher zurückzugreifen. Denn dies sorgt für einen effizienten Betrieb des Lawinenairbagsystems. Zudem bleibt dann die elektrische Energie des zweiten, als Entlastungselement dienenden Energiespeichers erhalten und steht zum Abdecken von Spitzenlasten weitgehend uneingeschränkt zur Verfügung. Die weiteren elektronischen Komponenten können insbesondere Leuchtmittel oder dergleichen Anzeigeelemente umfassen, welche den Bereitschaftsmodus der Befüllvorrichtung und/oder einen Ladungszustand der elektrischen Energiespeicher anzeigen.

Als weiter vorteilhaft hat es sich gezeigt, wenn der erste Energiespeicher zum zumindest partiellen Kompensieren einer Selbstentladung des zweiten Energiespeichers ausgebildet ist. Denn so kann sichergestellt werden, dass stets für einen optimierten Betrieb des Elektromotors günstige Bedingungen vorliegen.

Vorzugsweise ist der zweite Energiespeicher als Kondensator ausgebildet. Insbesondere kann der zweite Energiespeicher als Superkondensator oder Ultrakondensator und/oder als Lithium-Ionen-Kondensator ausgebildet sein. Mittels des als Kondensator ausgebildeten zweiten Energiespeichers lassen sich im Betrieb des Elektromotors auftretende Spitzenlasten besonders gut abdecken. Denn der Kondensator kann seine elektrische Energie besonders rasch abgeben. Dies liegt an der um ein Vielfaches größeren Leistungsdichte insbesondere eines Superkondensators gegenüber einem Akkumulator. Zudem ist bei dem als Kondensator ausgebildeten zweiten Energiespeicher vorteilhaft, dass der Kondensator auch bei sehr tiefen und sehr hohen Temperaturen seine elektrische Energie problemlos dem Elektromotor zur Verfügung stellen kann.

Vorzugsweise ist die Steuerungseinrichtung dazu ausgebildet, ein Laden des Kondensators mit aus dem ersten Energiespeicher stammender elektrischer Energie zu bewirken. Dann braucht nicht für den Kondensator eine separate Ladevorrichtung vorgesehen zu werden.

Besonders bevorzugt ist es daher, wenn der erste Energiespeicher als nicht wieder aufladbare Batterie ausgebildet ist und der zweite Energiespeicher als Kondensator, wobei die Steuerungseinrichtung dafür sorgt, dass mittels der nicht wieder aufladbaren Batterie die Selbstentladung des Kondensators kompensiert werden kann. So kann nämlich einerseits sichergestellt werden, dass der Kondensator jederzeit dazu in der Lage ist, vom Elektromotor bereitzustellende Spitzenlasten abzudecken. Dennoch ist die Befüllvorrichtung besonders einfach ausgebildet, und eine zuverlässige Auslösung des Airbags kann sichergestellt werden.

Zusätzlich oder alternativ kann vorgesehen sein, dass die Steuerungseinrichtung dazu ausgebildet ist, ein Einbringen von elektrischer Energie aus dem Kondensator in den ersten Energiespeicher zu bewirken. So kann beispielsweise dann, wenn der Airbag nicht ausgelöst wurde, elektrische Energie aus dem Kondensator wieder in den ersten Energiespeicher zurück verschoben werden. Dadurch werden die mit der Selbstentladung des Kondensators einhergehenden Verluste besonders weitgehend vermieden.

Vorzugsweise ist die Steuerungseinrichtung dazu ausgebildet, das Laden des Kondensators mit der aus dem ersten Energiespeicher stammenden elektrischen Energie in Abhängigkeit von einer Temperatur zu bewirken. Beispielsweise kann vorgesehen sein, dass der Kondensator dann geladen wird, wenn das Lawinenairbagsystem sehr kalten Umgebungstemperaturen ausgesetzt ist. Dem liegt die Erkenntnis zugrunde, dass mittels des ersten, bevorzugt als Batterie oder Akkumulator ausgebildeten Energiespeichers einfach und zuverlässig elektrische Energie zum Versorgen des Elektromotors bereitgestellt werden kann, solange keine zu tiefen Temperaturen vorliegen.

Dies kann beispielsweise zu Beginn einer Skitour der Fall sein, wenn ein Tourengeher, welcher mit dem Lawinenairbagsystem ausgestattet ist, von einem beheizten Ort wie etwa einer Hütte oder dergleichen Unterkunft aufbricht. Bei sinkender Umgebungstemperatur und damit einhergehend kälter werdendem ersten Energiespeicher kann es dann jedoch sinnvoll sein, den Kondensator zu laden. Denn der Kondensator ist sehr unanfällig für niedrige Temperaturen im Hinblick auf das Abgeben der in diesem gespeicherten elektrischen Energie an den Elektromotor. Auf diese Weise kann der geringeren Leistung des ersten Energiespeichers bei extrem niedrigen Temperaturen Rechnung getragen werden. Hierfür kann insbesondere vorgesehen sein, dass die Steuerungseinrichtung dann das Laden des Kondensators mit der aus dem ersten Energiespeicher stammenden elektrischen Energie bewirkt, wenn die Umgebungstemperatur einen vorbestimmten Schwellenwert unterschreitet.

Zusätzlich oder alternativ kann die Steuerungseinrichtung dazu ausgebildet sein, das Laden des Kondensators mit der aus dem ersten Energiespeicher stammenden elektrischen Energie in Abhängigkeit von einem Aktivieren eines Bereitschaftsmodus der Befüllvorrichtung zu bewirken. Wird also die Befüllvorrichtung in den Bereitschaftsmodus oder Standby-Modus versetzt, so sorgt die Steuerungseinrichtung dafür, dass der Kondensator dann geladen wird. Dadurch wird die Zeit minimiert, während welcher durch Selbstentladung des Kondensators die Menge an in diesem gespeicherter elektrischer Energie abnehmen kann. Auch dies ist im Hinblick auf die Auslösesicherheit des Lawinenairbagsystems vorteilhaft. Zudem ist auch eine derartige Auslegung der Steuerungseinrichtung steuerungstechnisch beziehungsweise regelungstechnisch besonders einfach umsetzbar.

Vorzugsweise ist der Kondensator auf einer Leiterplatte angeordnet und mittels einer Vergussmasse in seiner Lage fixiert. Insbesondere kann der Kondensator durch eine Mehrzahl von Kondensatorelementen gebildet sein, welche elektrisch in Reihe geschaltet sind. Durch die damit einhergehende Auslegung auf eine höhere Spannung kann der Kondensator besonders viel elektrische Energie bereitstellen.

Die Steuerungseinrichtung kann ein Überwachungssystem und/oder Managementsystem aufweisen, mittels welchem fehlerhafte Zustände der Energiespeicher erkannt werden können, und welches insbesondere dazu ausgelegt sein kann, die Energiespeicher vor einer Überladung zu schützen und/oder einen Ladungsausgleich zwischen Energiespeichereinheiten des jeweiligen Energiespeichers durchzuführen. Dies ist etwa im Hinblick auf die Kondensatorelemente des Kondensators vorteilhaft, welche elektrisch in Reihe geschaltet sind.

Durch das Vergießen des Kondensators mit weiteren Komponenten auf der Leiterplatte kann sichergestellt werden, dass der Kondensator ausreichend vibrationsfest und korrosionsfest ist und so den beim Einsatz des Lawinenairbagsystems auftretenden Beanspruchungen gut standhält.

Zusätzlich können zum Erreichen einer hohen Vibrationsfestigkeit vibrationsresistente Steckverbinder zum Einsatz kommen, eine robuste Mechanik, eine Fixierung von kritischen Komponenten, insbesondere durch Gussgehäuse und/oder einen Verguss dieser Komponenten, und dergleichen. Für die Vibrationsfestigkeit ist es zudem vorteilhaft, wenn die Kondensatorelemente in einem flachen Gehäuse liegend untergebracht sind. So kann sichergestellt werden, dass eine Höhe des Gehäuses beispielsweise bei etwa 45 Millimetern liegt. Auch die Leiterplatte kann vergossen und/oder lackiert sein, um die Vibrationsfestigkeit von empfindlichen Komponenten der Befüllvorrichtung zu erhöhen.

Eine statische Aufladung von Komponenten des Lawinenairbagsystems beziehungsweise der Befüllvorrichtung, wie sie etwa bei einem Transport des Lawinenairbagsystems in einem Helikopter aufgrund der Rotation der Rotorblätter des Helikopters zu befürchten ist, kann durch Verbinden von Komponenten wie des Elektromotors, der Steuerungseinrichtung beziehungsweise dergleichen Elektronikbauteilen sowie von Tasten, Schaltern und dergleichen miteinander auf dem gleichen Massepotential vermieden werden.

Vorzugsweise weist das Lawinenairbagsystem eine mittels der Steuerungseinrichtung ansteuerbare Warneinrichtung auf, welche dazu ausgebildet ist, nach Ablauf einer vorbestimmten Zeitspanne einen Nutzer des Lawinenairbagsystems zu einem Nachladen zumindest eines der Energiespeicher und/oder zu einem Ersetzen zumindest eines der Energiespeicher aufzufordern. Beispielsweise kann dann, wenn der zweite Energiespeicher als Kondensator ausgebildet ist, nach 24 Stunden die Warneinrichtung den Nutzer auffordern, den Kondensator nachzuladen. Auch dies erhöht die Auslösesicherheit des Lawinenairbagsystems.

Insbesondere, wenn als der erste Energiespeicher eine nicht wieder aufladbare Batterie zum Einsatz kommt, kann mittels der Warneinrichtung der Nutzer dazu aufgefordert werden, die Batterie auszutauschen, beispielsweise nach einer Auslösung des Airbags oder nach einer längeren Lagerungszeit des Lawinenairbagsystems. Die Warneinrichtung kann den Nutzer auch dazu auffordern, den ersten Energiespeicher nachzuladen, wenn dieser als Akkumulator ausgebildet ist.

Vorzugsweise weist zumindest einer der Energiespeicher wenigstens zwei separate und aus dem Lawinenairbagsystem entnehmbare Energiespeichereinheiten auf. Hierbei ist eine jeweilige Nennkapazität der Energiespeichereinheit derart bemessen, dass durch Nutzung der elektrischen Energie der jeweiligen Energiespeichereinheit der Airbag, insbesondere bei einer Umgebungstemperatur von bis zu -30 Grad Celsius, mindestens einmal befüllt werden kann. So ist eine besonders hohe Ausfallsicherheit gewährleistet, und dennoch kann ein Nutzer des Lawinenairbagsystems entscheiden, ob er das Lawinenairbagsystem mit nur einer Energiespeichereinheiten oder mit mehr als einer der Energiespeichereinheiten bestückt, um im Zweifelsfall eine zweite Auslösung zu ermöglichen. Dadurch ist die Flexibilität beim Einsatz des Lawinenairbagsystems erhöht.

Vorzugsweise umfasst das Lawinenairbagsystem eine Betätigungseinrichtung, mittels welcher die Befüllvorrichtung in einen ausgelösten Zustand verbracht werden kann, in welchem die Befüllvorrichtung Umgebungsluft in den Airbag einbringt. Die Betätigungseinrichtung kann einen Griff umfassen, an welchem der Nutzer des Lawinenairbagsystems zieht, um das Befüllen beziehungsweise Aufblasen des Airbags zu erreichen. Insbesondere kann eine Schalteinrichtung mittels der Betätigungseinrichtung geschaltet werden, wobei die Steuerungseinrichtung ein Signal empfängt, dass die Schalteinrichtung geschaltet wurde. Daraufhin bewirkt die Steuerungseinrichtung durch Ansteuern des Elektromotors, dass der Airbag aufgeblasen wird.

Insbesondere an der Betätigungseinrichtung, beispielsweise an dem Griff, kann zudem ein Indikator ausgebildet sein, welcher über den Ladungszustand der Energiespeicher und/oder über einen Betriebszustand der Befüllvorrichtung Aufschluss gibt. Beispielsweise kann der Indikator anzeigen, dass die Befüllvorrichtung sich im Bereitschaftsmodus oder Standby-Modus befindet.

Die erfindungsgemäße Trageinrichtung, welche etwa als Traggeschirr insbesondere jedoch als Rucksack ausgebildet sein kann, weist ein erfindungsgemäßes Lawinenairbagsystem auf. Hierbei ist bevorzugt der Airbag oder Lawinenairbag in einer Airbagtasche des Rucksacks untergebracht. Bei der Airbagtasche handelt es sich meist um eine von einem weiteren Staufach des Rucksacks getrennte Kammer beziehungsweise ein derartiges Behältnis, in welchem der Airbag vor einer Beschädigung geschützt aufbewahrt ist. Zudem sorgt die Airbagtasche dafür, dass der Airbag während des normalen Gebrauchs nicht aus dem Rucksack herausfällt. Zugleich sollte der Airbag so eng wie möglich gepackt sein, damit nicht unnötig wertvolles Rucksackvolumen von dem Airbag beansprucht wird. Auch dieser Zweck wird durch die Airbagtasche beziehungsweise das Behältnis sichergestellt, in welchem der in seine Verstaustellung verbrachte Airbag aufgenommen ist. Wird jedoch das Lawinenairbagsystem ausgelöst, so bewirkt dies infolge des Aufblasens der Airbags das Öffnen der Airbagtasche, sodass der dann freigegebene Airbag weiter befüllt werden kann.

Bei dem erfindungsgemäßen Verfahren zum Betreiben eines Lawinenairbagsystems, welches wenigstens einen Airbag und eine Befüllvorrichtung umfasst, wird mittels der Befüllvorrichtung Umgebungsluft in den Airbag eingebracht. Die Befüllvorrichtung umfasst wenigstens ein Gebläse mit einem Elektromotor, einen ersten elektrischen Energiespeicher zum Versorgen des Elektromotors mit elektrischer Energie, um das Aufblasen des Airbags mit Umgebungsluft zu bewirken, einen zweiten elektrischen Energiespeicher, und eine Steuerungseinrichtung, welche den Elektromotor ansteuert. Mittels der Steuerungseinrichtung wird in Abhängigkeit von wenigstens einem Parameter festgelegt, ob zum Befüllen des Airbags mit der Umgebungsluft der Elektromotor beim Angesteuert-Werden mit aus beiden Energiespeichern zusammen stammender elektrischer Energie oder mit nur aus einem der beiden Energiespeicher alleine stammender elektrischer Energie beaufschlagt wird. Durch ein solches Verfahren lässt sich die Auslösesicherheit des Lawinenairbagsystems verbessern.

Die Vorteile und bevorzugten Ausführungsformen des erfindungsgemäßen Lawinenairbagsystems gelten auch für die erfindungsgemäße Trageinrichtung und für das erfindungsgemäße Verfahren sowie umgekehrt.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: schematisch ein Lawinenairbagsystem, bei welchem zum Versorgen eines Elektromotors eines Gebläses eine Batterie und ein Kondensator zum Einsatz kommen, wobei mittels des Gebläses ein Airbag beziehungsweise Lawinenairbag aufgeblasen wird;
- Fig. 2: eine Variante des Lawinenairbagsystems, bei welcher anstelle der Batterie ein Akkumulator verwendet wird;
- Fig. 3: schematisch Möglichkeiten, den Kondensator des Lawinenairbagsystems gemäß Fig. 1 durch Anschließen an ein Stromnetz oder mittels der Batterie zu laden;
- Fig. 4: eine weitere Variante des Lawinenairbagsystems, bei welcher ein Laden des Kondensators über ein externes Stromnetz nicht vorgesehen ist, jedoch der Kondensator durch eine Batterie beziehungsweise einen Akkumulator nachgeladen wird;
- Fig. 5: eine weitere Variante des Lawinenairbagsystems, bei welcher ebenfalls die Batterie zum Laden des Kondensators genutzt werden kann, wobei sowohl der Kondensator als auch die Batterie den Elektromotor mit elektrischer Energie versorgen können; und
- Fig. 6: schematisch einen Lawinenairbagrucksack mit dem Lawinenairbagsystem gemäß Fig. 1.

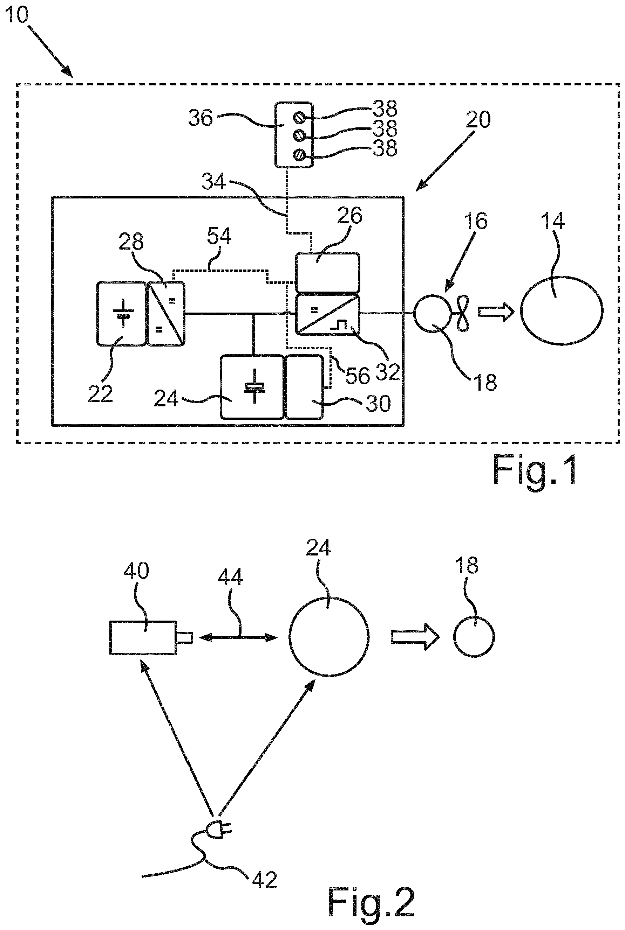

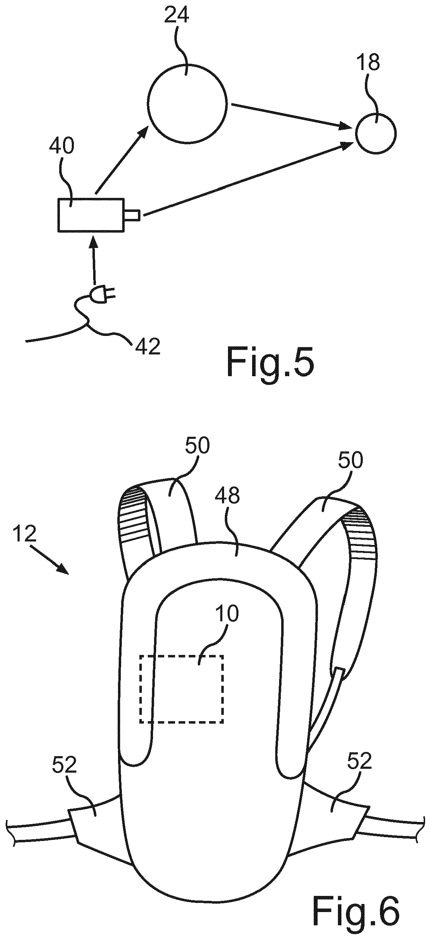

Fig. 1 zeigt schematisch ein Lawinenairbagsystem 10, wie es zur Verwendung in einer Trageinrichtung etwa in Form eines Rucksacks 12 (vergleiche Fig. 6) vorgesehen ist. Wenn das Lawinenairbagsystem 10 in dem Rucksack 12 angeordnet ist, so handelt es sich bei dem Rucksack 12 um einen Lawinenairbagrucksack. Eine Befüllvorrichtung 20 des Lawinenairbagsystems 10 ist vorliegend dazu ausgebildet, einen Airbag 14 des Lawinenairbagsystems 10 durch Betreiben eines Gebläses 16 mit Umgebungsluft zu füllen, wobei das Gebläse 16 einen Elektromotor 18 aufweist. Durch Betreiben des Gebläses 16 wird also nach einem Auslösen des Lawinenairbagsystems 10 dafür gesorgt, dass der Airbag 14 innerhalb von etwa 5 Sekunden mit Umgebungsluft befüllt wird.

Insbesondere bei den sehr tiefen Umgebungstemperaturen, bei welchen das Lawinenairbagsystem 10 zum Einsatz kommen kann, stellt es eine Herausforderung dar, die Versorgung des Elektromotors 18 mit elektrischer Energie sicherzustellen. Vorliegend umfasst daher gemäß Fig. 1 die Befüllvorrichtung 20 des Lawinenairbagsystems 10 nicht nur das Gebläse 16, sondern auch einen ersten Energiespeicher in Form einer Batterie 22 und einen zweiten Energiespeicher in Form eines Kondensators 24. Der Kondensator 24 kann insbesondere als Superkondensator oder Ultrakondensator insbesondere in Form eines Doppelschichtkondensators und/oder als Lithium-Ionen-Kondensator ausgebildet sein. Des Weiteren kann der Kondensator 24 eine Mehrzahl von Kondensatorelementen in Form von bevorzugt in Reihe geschalteten Superkondensatoren oder Ultrakondensatoren beziehungsweise Lithium-Ionen-Kondensatoreinheiten umfassen. Dann kann der Kondensator 24 eine höhere Spannung bereitstellen als sie ein einzelnes Kondensatorelement bereitzustellen in der Lage ist.

Eine Steuerungseinrichtung etwa in Form eines elektronischen Steuergeräts 26 steuert den Elektromotor 18 an und legt hierbei fest, aus welchen der unabhängig voneinander zum Versorgen des Elektromotors 18 einsetzbaren Energiespeicher nach einem Auslösen des Lawinenairbagsystems 10 der Elektromotor 18 mit elektrischer Energie versorgt werden soll. Insbesondere kann das Steuergerät 26 dafür sorgen, dass der Elektromotor 18 sowohl mit elektrischer Energie aus der Batterie 22 als auch mit elektrischer Energie aus dem Kondensator 24 versorgt wird, um das Aufblasen beziehungsweise das Befüllen des Airbags 14 mit Umgebungsluft zu bewirken.

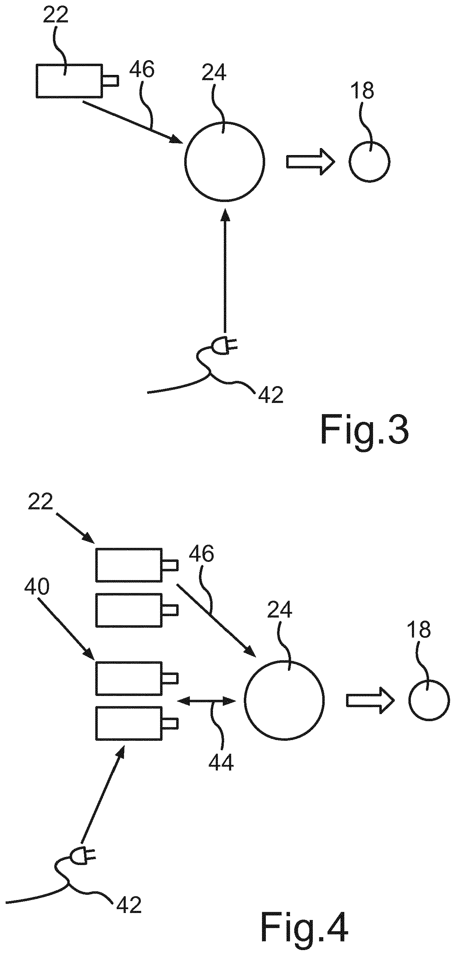

Die Batterie 22 kann insbesondere durch mindestens zwei herkömmliche, nicht wieder aufladbare Batteriezellen gebildet sein (vergleiche Fig. 4), welche elektrisch leitend miteinander verbunden sein können. Insbesondere können genau zwei solcher Batteriezellen zum Bereitstellen der Batterie 22 vorgesehen sein. Mittels eines Gleichspannungswandlers 28 kann die von der Batterie 22 bereitgestellte Spannung an die von dem Kondensator 24 breitgestellte Spannung angepasst werden.

Wie bereits erläutert, kann analog zu der Batterie 22 auch der Kondensator 24 durch eine Mehrzahl von Kondensatorelementen oder Zellen gebildet sein, welche bevorzugt ebenso wie die Batteriezellen elektrisch in Reihe geschaltet sind. Mittels einer dem Kondensator 24 zugeordneten Überwachungseinheit 30 können Spannungsunterschiede zwischen solchen Kondensatoreinheiten oder Kondensatorelementen festgestellt und ausgeglichen werden. Das Steuergerät 26 ist zum Ansteuern des Gleichspannungswandlers 28 und der Überwachungseinheit 30 ausgebildet. Entsprechende Steuerleitungen 54, 56 sind in Fig. 1 gezeigt. Zudem steuert das Steuergerät 26 einen weiteren Umrichter 32 an, welcher beispielsweise als Wechselrichter ausgebildet sein kann, und über welchen die von der Batterie 22 und dem Kondensator 24 stammende elektrische Energie dem Elektromotor 18 zugeführt wird.

Über eine Auslöseleitung 34 ist das Steuergerät 26 mit einem Auslösegriff 36 oder einer derartigen Betätigungseinrichtung verbunden. Beispielsweise kann durch Ziehen an dem Auslösegriff 36 die Befüllvorrichtung 20 in einen ausgelösten Zustand verbracht werden, in welchem die Befüllvorrichtung 20 Umgebungsluft in den Airbag 14 einbringt. An dem Auslösegriff 36 können Anzeigeelemente 38 angeordnet sein, welche über den Ladezustand der Energiespeicher in Form der Batterie 22 und des Kondensators 24 Aufschluss geben. Beispielsweise können eine grün leuchtende, eine gelb leuchtende und eine rot leuchtende Leuchtdiode als derartige Anzeigeelemente 38 vorgesehen sein. Des Weiteren können die Anzeigeelemente 38 vorzugsweise anzeigen, dass die Befüllvorrichtung 20 eingeschaltet ist und sich in einem Bereitschaftsmodus beziehungsweise Standby-Modus befindet.

Durch die Verwendung nicht wieder aufladbarer Batteriezellen zum Bereitstellen der Batterie 22 ist die Energiebereitstellung auch bei sehr niedrigen Temperaturen deutlich leistungsfähiger, als dies bei einer Verwendung von Akkumulatoren als dem ersten Energiespeicher der Fall wäre. Zudem können nach dem Auslösen des Airbags 14 die Batteriezellen der Batterie 22 sehr einfach durch neue Batteriezellen ersetzt werden.

Um die Sicherheit im Hinblick auf das Aufblasen des Airbags 14 weiter zu erhöhen, ist vorliegend der Kondensator 24 vorgesehen, welcher als Entlastungselement dient.

Durch ein derartiges Entlastungselement können Spitzenlasten im Betrieb des Elektromotors 18 abgedeckt werden. Zudem ist der Kondensator 24 nicht temperaturempfindlich, sodass mittels des Kondensators 24 auch bei sehr niedrigen Temperaturen sehr rasch viel elektrische Energie zum Betreiben des Elektromotors 18 bereitgestellt werden kann.

Insbesondere ist vorliegend vorgesehen, dass das Steuergerät 26 mittels der Batterie 22 elektrisch versorgt wird. Beim Betreiben des Elektromotors 18 unterstützt hingegen der Kondensator 24 die Batterie 22. Vorzugsweise ist die Batterie 22 jedoch derart bemessen, dass zumindest eine einmalige Auslösung, also zumindest ein einmaliges Befüllen des Airbags 14, mit der in der Batterie 22 gespeicherten Energiemenge auch bei Umgebungstemperaturen von bis zu -30 Grad Celsius möglich ist.

Das Steuergerät 26 kann auch dafür sorgen, dass der Elektromotor 18 lediglich mit der aus dem Kondensator 24 stammenden Energie betrieben wird. Insbesondere ist jedoch vorgesehen, dass sowohl die Batterie 22 als auch der Kondensator 24 zumindest vorübergehend elektrische Energie zum Betreiben des Elektromotors 18 bereitstellen. Dies kann von dem Steuergerät 26 beispielsweise dann bewirkt werden, wenn der Elektromotor 18 eingeschaltet wird oder wenn der Elektromotor 18 eine bestimmte Soll-Leistung bereitstellen soll, welche höher ist als ein vorbestimmter Schwellenwert der Soll-Leistung.

Fig. 2 zeigt schematisch Komponenten einer Variante des Lawinenairbagsystems 10. Bei dieser Variante ist der erste elektrische Energiespeicher nicht als nicht wieder aufladbare Batterie 22 ausgebildet, sondern als wieder aufladbare Batterie beziehungsweise als Akkumulator 40. In Fig. 2 ist schematisch ein Ladekabel 42 gezeigt, welches an ein externes Stromnetz angeschlossen werden kann, um etwa vor einer Skitour den Kondensator 24 über das Netz zu laden. Des Weiteren kann mittels des Ladekabels 42 auch der Akkumulator 40 aufgeladen werden. Auf Seiten der Befüllvorrichtung 20 ist zum Anschließen des Ladekabels 42 ein geeigneter Ladeanschluss, etwa in Form eines USB-Anschlusses, insbesondere eines Mini-USB-Anschlusses vorgesehen. Zudem ist in Fig. 2 durch einen Doppelpfeil 44 angedeutet, dass der Akkumulator 40 zum Kompensieren einer Selbstentladung des Kondensators 24 eingesetzt werden kann.

Dieses Kompensieren der Selbstentladung des Kondensators 24 ist im Übrigen auch mit der in Fig. 1 gezeigten Batterie 22 möglich. Wenn die Batterie 22 durch zwei herkömmliche, nicht wieder aufladbare Batteriezellen gebildet ist, so kann sichergestellt werden, dass mittels der elektrischen Energie der Batterie 22 der Kondensator 24 viermal bis fünfmal komplett geladen werden kann. Dies gilt insbesondere dann, wenn das Verschieben der elektrischen Energie aus der Batterie 22 in den Kondensator 24 bei Temperaturen von mehr als Null Grad Celsius stattfindet. Kann der Kondensator 24 viermal bis fünfmal komplett geladen werden, so sind mittels der in den Kondensator 24 verschobenen elektrischen Energie vier bis fünf Auslösungen des Lawinenairbagsystems 10 möglich, bei welchen der Airbag 14 aufgeblasen wird.

Auch bei der in Fig. 2 gezeigten Variante können sowohl der Akkumulator 40 als auch der Kondensator 24 unabhängig voneinander den Elektromotor 18 mit elektrischer Energie versorgen. Das Steuergerät 26 kann jedoch auch bei dieser Variante das Beaufschlagen des Elektromotors 18 mit sowohl von dem Akkumulator 40 als auch mit von dem Kondensator 24 stammender elektrischer Energie bewirken.

Analog zu der mit Bezug auf Fig. 2 beschriebenen Variante sorgt auch bei der in Fig. 3 gezeigten Variante des Lawinenairbagsystems 10 nicht der Kondensator 24, sondern der erste Energiespeicher in Form der Batterie 22 für die Versorgung des Steuergeräts 26 beziehungsweise weiterer elektronischer Komponenten der Befüllvorrichtung 20 mit elektrischer Energie. Des Weiteren ist auch bei der in Fig. 3 gezeigten Variante vorgesehen, dass die Batterie 22 eine Selbstentladung des als Entlastungselement dienenden Kondensators 24 kompensiert. Jedoch kann bei Ausbildung des ersten Energiespeichers als die Batterie 22 keine elektrische Energie von dem Kondensator 24 in die Batterie 22 eingebracht werden. Dies ist jedoch bei der in Fig. 2 gezeigten Variante möglich. Daher ist in Fig. 3 lediglich ein Pfeil 46 dargestellt, welcher das Kompensieren der Selbstentladung des Kondensators 24 veranschaulicht. Um das durch den Doppelpfeil 44 veranschaulichte Zurückverschieben von elektrischer Energie aus dem Kondensator 24 in den Akkumulator 40 zu ermöglichen, ist der (in Fig. 2 nicht gezeigte) Gleichspannungswandler 28 (vergleiche Fig. 1) bevorzugt als bidirektionaler Gleichspannungswandler 28 ausgebildet.

Des Weiteren geht auch aus Fig. 3 hervor, dass der Kondensator 24 durch Anschließen des Kondensators 24 an das Ladekabel 42 über das externe Stromnetz geladen werden kann.

Bei der in Fig. 4 gezeigten Variante des Lawinenairbagsystems 10 ist sowohl die Batterie 22 als auch der Akkumulator 40 vorgesehen. Die Batterie 22 und der Akkumulator 40 bilden somit einen ersten Energiespeicher der Befüllvorrichtung 20 (vergleiche Fig. 1). Sowohl die Batterie 22 als auch der Akkumulator 40 können zum Kompensieren der Selbstentladung des Kondensators 24 eingesetzt werden, wie dies in Fig. 4 durch den Pfeil 46 beziehungsweise den Doppelpfeil 44 veranschaulicht ist. Jedoch ist bei der Variante gemäß Fig. 4 nicht vorgesehen, dass der Kondensator 24 über das externe Stromnetz, also durch Verwendung des Ladekabels 42 nachgeladen wird. Vielmehr sorgen lediglich die Batterie 22 oder der Akkumulator 40 für das Aufladen des Kondensators 24. Auf diese Weise braucht kein gesondertes Ladegerät für den Kondensator 24 vorgesehen und vorgehalten zu werden.

Bei den mit Bezug auf Fig. 1 bis Fig. 4 beschriebenen Varianten des Lawinenairbagsystems 10 kann das Laden des Kondensators 24 mittels des Steuergeräts 26 dann bewirkt werden, wenn die Befüllvorrichtung 20 in den Bereitschaftsmodus versetzt wird. Hierfür wird das Lawinenairbagsystem 10 eingeschaltet und das Steuergerät 26 wird mit elektrischer Energie versorgt. In diesem Bereitschaftsmodus bewirkt das Betätigen des Auslösegriffs 36, dass das Gebläse 16 den Airbag 14 mit Umgebungsluft befüllt. Das Steuergerät 26 erhält hierbei ein Signal, dass der Auslösegriff 36 betätigt wurde und steuert daraufhin den Elektromotor 18 an.

Beim Einschalten beziehungsweise Aktivieren des Bereitschaftsmodus kann das Gebläse 16 kurzzeitig betrieben werden, sodass der Nutzer des Rucksacks 12 beziehungsweise des Lawinenairbagsystems 10 eine Rückmeldung darüber erhält, dass der Bereitschaftsmodus aktiviert ist. Es kann jedoch auch auf anderem Wege eine, insbesondere haptische, Rückmeldung für diesen Zweck erzeugt werden, oder es kann dem Nutzer auf optischem und/oder akustischem Wege kommuniziert werden, dass der Bereitschaftsmodus der Befüllvorrichtung 20 aktiviert worden ist.

Es kann vorgesehen sein, dass der Kondensator 24 immer dann geladen wird, wenn die Befüllvorrichtung 20 in den Bereitschaftsmodus versetzt wird. Auf diese Weise werden Verluste des Kondensators 24 aufgrund der Selbstentladung besonders gering gehalten. Des Weiteren kann vorgesehen sein, dass dann, wenn die Umgebungstemperatur unter einen vorbestimmten Schwellenwert sinkt, elektrische Energie aus der Batterie 22 beziehungsweise aus dem Akkumulator 40 in den Kondensator 24 verschoben wird. So kann der bei niedriger Umgebungstemperatur sinkenden Leistung des Akkumulators 40 beziehungsweise der Batterie 22 Rechnung getragen werden.

Die Befüllvorrichtung 20 kann auch wenigstens zwei getrennte Einheiten in Form der von Batterien 22 und/oder Akkumulatoren 40 aufweisen. Hierbei ist bevorzugt jeweils eine dieser Einheiten ausreichend, bei wenigstens einem Auslösen des Lawinenairbagsystems 10 das Befüllen des Airbags 14 mit Umgebungsluft zu bewirken. In einem solchen Fall kann der Nutzer des Lawinenairbagsystems 10 selber entscheiden, ob die zweite Batterie 22 beziehungsweise der zweite Akkumulator 40 mitgenommen wird, um im Zweifelsfall eine zweite Auslösung zu ermöglichen. Auch bei einer solchen Konstellation kann zusätzlich das Entlastungselement in Form des Kondensators 24 vorgesehen sein, um in diesem einen Teil der elektrischen Energie zu speichern und die Auslösesicherheit des Lawinenairbagsystems 10 bei tiefen Temperaturen zu erhöhen. Ein Beispiel für ein derartiges Lawinenairbagsystem 10 ist in Fig. 4 schematisch gezeigt.

In Fig. 5 sind Komponenten des Lawinenairbagsystems 10 gemäß einer weiteren Variante gezeigt, aus welcher deutlich wird, dass sowohl von dem Akkumulator 40 als auch von dem Kondensator 24 elektrische Energie für den Elektromotor 18 bereitgestellt werden kann. Auch bei der in Fig. 5 gezeigten Variante ist jedoch vorgesehen, dass nicht der Kondensator 24 durch Anschließen an eine externe Stromquelle nachgeladen wird. Vielmehr erfolgt das Laden des Kondensators 24 durch den Akkumulator 40. Der Akkumulator 40 kann jedoch seinerseits, wie in Fig. 5 schematisch gezeigt, über das Ladekabel 42 durch Anschließen des Ladekabels 42 an das externe Stromnetz geladen werden.

Beim Aufblasen des Airbags 14 kann zunächst der Elektromotor 18 des Gebläses 16 mit maximaler Leistung betrieben werden, um den Airbag 14 mit einem gewissen Volumen an Umgebungsluft von beispielsweise etwa 150 Litern zu befüllen. In einem weiteren Schritt kann dann der im Inneren des Airbags 14 einzustellende Druck aufgebaut werden, wobei zum Halten des Drucks insbesondere ein Ventil geschlossen werden kann. Für den Druckaufbau kann der Elektromotor 18 mit einer geringeren Leistung betrieben werden als zum Aufblasen auf das gewünschte Volumen. Des Weiteren kann vorgesehen sein, dass zu Beginn des Aufblasvorgangs der Elektromotor 18 zumindest überwiegend von dem Kondensator 24 mit elektrischer Energie versorgt wird. Es kann jedoch auch zu Beginn des Aufblasvorgangs zusätzlich die elektrische Energie der Batterie 22 beziehungsweise des Akkumulators 40 genutzt werden.

In Fig. 6 ist schematisch gezeigt, dass der Airbag 14 des Lawinenairbagsystems 10 in einer Airbagtasche 48 des Rucksacks 12 angeordnet sein kann. Bei einer solchen Airbagtasche 48 handelt es sich vorliegend um eine von einem weiteren Staufach des Rucksacks 12 getrennte Kammer beziehungsweise ein derartiges Behältnis, in welchem der Airbag 14 vor einer Beschädigung geschützt aufbewahrt ist. Zudem sorgt die Airbagtasche 48 dafür, dass der Airbag 14 während des normalen Gebrauchs nicht aus dem Rucksack 12 herausfällt. Zugleich sollte der Airbag 14 so eng wie möglich gepackt sein, damit nicht unnötig wertvolles Rucksackvolumen von dem Airbag 14 beansprucht wird. Auch dieser Zweck wird durch die Airbagtasche 48 erfüllt. Wird das Lawinenairbagsystem 10 ausgelöst, so bewirkt dies infolge des Aufblasens der Airbags 14 das Öffnen der Airbagtasche 48. Der dann freigegebene beziehungsweise freiliegende Airbag 14 kann dann weiter mittels des Gebläses 16 mit Umgebungsluft befüllt werden.

Von dem Rucksack 12 sind in Fig. 6 des Weiteren Schultergurte 50 sowie Hüftgurte 52 schematisch gezeigt. Der Auslösegriff 36 des Lawinenairbagsystems 10, welcher insbesondere aus einem der Schultergurte 50 heraustreten kann, ist in Fig. 6 der Übersichtlichkeit halber nicht dargestellt.

## Patentansprüche

1. Lawinenairbagsystem, welches wenigstens einen Airbag (14) und eine Befüllvorrichtung (20) zum Einbringen von Umgebungsluft in den Airbag (14) umfasst, wobei die Befüllvorrichtung (20) wenigstens ein Gebläse (16) mit einem Elektromotor (18), einen ersten elektrischen Energiespeicher (22, 40) zum Versorgen des Elektromotors (18) mit elektrischer Energie, um das Aufblasen des Airbags (14) mit Umgebungsluft zu bewirken, einen zweiten elektrischen Energiespeicher (24) und eine Steuerungseinrichtung (26) zum Ansteuern des Elektromotors (18) umfasst,
**dadurch gekennzeichnet, dass**
mittels der Steuerungseinrichtung (26) in Abhängigkeit von wenigstens einem Parameter beim Befüllen des Airbags (14) mit der Umgebungsluft sowohl ein Beaufschlagen des Elektromotors (18) mit aus beiden Energiespeichern (22, 40, 24) zusammen stammender elektrischer Energie als auch mit nur aus einem der beiden Energiespeicher (22, 40, 24) alleine stammender elektrischer Energie bewirkbar ist.

2. Lawinenairbagsystem nach Anspruch 1,
**dadurch gekennzeichnet, dass**
die Steuerungseinrichtung (26) dazu ausgebildet ist, in Abhängigkeit von einem Eingeschaltet-Werden des Elektromotors (18) das Beaufschlagen des Elektromotors (18) mit aus beiden Energiespeichern (22, 40, 24) stammender elektrischer Energie zu bewirken.

3. Lawinenairbagsystem nach Anspruch 1 oder 2,
**dadurch gekennzeichnet, dass**
die Steuerungseinrichtung (26) dazu ausgebildet ist, in Abhängigkeit vom Überschreiten eines vorbestimmten Schwellenwerts einer von dem Elektromotor (18) beim Befüllen des Airbags (14) abzugebenden Leistung das Beaufschlagen des Elektromotors (18) mit aus beiden Energiespeichern (22, 40, 24) stammender elektrischer Energie zu bewirken.

4. Lawinenairbagsystem nach einem der Ansprüche 1 bis 3,
**dadurch gekennzeichnet, dass**
zumindest einer der beiden Energiespeicher (22) als nicht wieder aufladbare Batterie ausgebildet ist.

5. Lawinenairbagsystem nach einem der Ansprüche 1 bis 4,
**dadurch gekennzeichnet, dass**
der erste Energiespeicher (22, 40) dem Versorgen der Steuerungseinrichtung (26) und/oder weiterer elektronischer Komponenten mit elektrischer Energie dient und/oder zum zumindest partiellen Kompensieren einer Selbstentladung des zweiten Energiespeichers (24) ausgebildet ist.

6. Lawinenairbagsystem nach einem der Ansprüche 1 bis 5,
**dadurch gekennzeichnet, dass**
der zweite Energiespeicher (24) als Kondensator, insbesondere als Superkondensator, ausgebildet ist.

7. Lawinenairbagsystem nach Anspruch 6,
**dadurch gekennzeichnet, dass**
die Steuerungseinrichtung (26) dazu ausgebildet ist, ein Laden des Kondensators (24) mit aus dem ersten Energiespeicher (22, 40) stammender elektrischer Energie und/oder ein Einbringen von elektrischer Energie aus dem Kondensator (24) in den ersten Energiespeicher (40) zu bewirken.

8. Lawinenairbagsystem nach Anspruch 7,
**dadurch gekennzeichnet, dass**
die Steuerungseinrichtung (26) dazu ausgebildet ist, das Laden des Kondensators (24) mit der aus dem ersten Energiespeicher (22, 40) stammenden elektrischen Energie in Abhängigkeit von einer Temperatur und/oder in Abhängigkeit von einem Aktivieren eines Bereitschaftsmodus der Befüllvorrichtung (20) zu bewirken.

9. Lawinenairbagsystem nach einem der Ansprüche 6 bis 8,
**gekennzeichnet durch**
der Kondensator (24) auf einer Leiterplatte angeordnet und mittels einer Vergussmasse in seiner Lage fixiert ist.

10. Lawinenairbagsystem nach einem der Ansprüche 1 bis 9,
**gekennzeichnet durch**
eine mittels der Steuerungseinrichtung (26) ansteuerbare Warneinrichtung, welche dazu ausgebildet ist, nach Ablauf einer vorbestimmten Zeitspanne einen Nutzer des Lawinenairbagsystems (10) zu einem Nachladen zumindest eines der Energiespeicher (24, 40) und/oder zu einem Ersetzen zumindest eines der Energiespeicher (22) aufzufordern.

11. Lawinenairbagsystem nach einem der Ansprüche 1 bis 10,
**dadurch gekennzeichnet, dass**
zumindest einer der Energiespeicher (22, 40, 24) wenigstens zwei separate und aus dem Lawinenairbagsystem (10) entnehmbare Energiespeichereinheiten aufweist, deren jeweilige Nennkapazität derart bemessen ist, dass durch Nutzung der elektrischen Energie der jeweiligen Energiespeichereinheit der Airbag (14), insbesondere bei einer Umgebungstemperatur von bis zu -30 Grad Celsius, mindestens einmal befüllt werden kann.

12. Lawinenairbagsystem nach einem der Ansprüche 1 bis 11,
**gekennzeichnet durch**
eine Betätigungseinrichtung (36), mittels welcher die Befüllvorrichtung (20) in einen ausgelösten Zustand verbringbar ist, in welchem die Befüllvorrichtung (20) Umgebungsluft in den Airbag (14) einbringt.

13. Trageinrichtung, insbesondere Rucksack (12), mit einem Lawinenairbagsystem (10) nach einem der Ansprüche 1 bis 12.

14. Verfahren zum Betreiben eines Lawinenairbagsystems (10), welches wenigstens einen Airbag (14) und eine Befüllvorrichtung (20) umfasst, mittels welcher Umgebungsluft in den Airbag (14) eingebracht wird, wobei die Befüllvorrichtung (20) wenigstens ein Gebläse (16) mit einem Elektromotor (18), einen ersten elektrischen Energiespeicher (22, 40) zum Versorgen des Elektromotors (18) mit elektrischer Energie, um das Aufblasen des Airbags (14) mit Umgebungsluft zu bewirken, einen zweiten elektrischen Energiespeicher (24) und eine Steuerungseinrichtung (26) umfasst, welche den Elektromotor (18) ansteuert,
**dadurch gekennzeichnet, dass**
mittels der Steuerungseinrichtung (26) in Abhängigkeit von wenigstens einem Parameter festgelegt wird, ob zum Befüllen des Airbags (14) mit der Umgebungsluft der Elektromotor (18) beim Angesteuert-Werden mit aus beiden Energiespeichern (22, 40, 24) zusammen stammender elektrischer Energie oder mit nur aus einem der beiden Energiespeicher (22, 40, 24) alleine stammender elektrischer Energie beaufschlagt wird.

## Claims

1. An avalanche airbag system including at least one airbag (14) and a filling device (20) for introducing ambient air into the airbag (14), wherein the filling device (20) includes at least one fan (16) with an electric motor (18), a first electrical energy storage (22, 40) for supplying the electric motor (18) with electrical energy to effect the inflation of the airbag (14) with ambient air, a second electrical energy storage (24) and a control device (26) for controlling the electric motor (18),
**characterized in that**
both supply of the electric motor (18) with electrical energy originating from both energy storages (22, 40, 24) together and with electrical energy originating from only one of the two energy storages (22, 40, 24) alone can be effected by means of the control device (26) depending on at least one parameter in filling the airbag (14) with the ambient air.

2. The avalanche airbag system according to claim 1,
**characterized in that**
the control device (26) is formed to effect the supply of the electric motor (18) with electrical energy originating from both energy storages (22, 40, 24) depending on the electric motor (18) being turned on.

3. The avalanche airbag system according to claim 1 or 2,
**characterized in that**
the control device (26) is formed to effect the supply of the electric motor (18) with electrical energy originating from both energy storages (22, 40, 24) depending on exceedance of a predetermined threshold value of a power to be output by the electric motor (18) in filling the airbag (14).

4. The avalanche airbag system according to any one of claims 1 to 3,
**characterized in that**
at least one of the two energy storages (22) is formed as a non-rechargeable battery.

5. The avalanche airbag system according to any one of claims 1 to 4,
**characterized in that**
the first energy storage (22, 40) serves for supplying the control device (26) and/or further electronic components with electrical energy and/or is formed for at least partially compensating for a self-discharge of the second energy storage (24).

6. The avalanche airbag system according to any one of claims 1 to 5,
**characterized in that**
the second energy storage (24) is formed as a capacitor, in particular as a supercapacitor.

7. The avalanche airbag system according to claim 6,
**characterized in that**
the control device (26) is formed to effect charging of the capacitor (24) with the electrical energy originating from the first energy storage (22, 40) and/or introduction of electrical energy from the capacitor (24) into the first energy storage (40).

8. The avalanche airbag system according to claim 7,
**characterized in that**
the control device (26) is formed to effect the charging of the capacitor (24) with the electrical energy originating from the first energy storage (22, 40) depending on a temperature and/or depending on an activation of a standby mode of the filling device (20).

9. The avalanche airbag system according to any one of claims 6 to 8,
**characterized in that**
the capacitor (24) is arranged on a circuit board and fixed in its position by means of a potting compound.

10. The avalanche airbag system according to any one of claims 1 to 9,
**characterized by**
a warning device controllable by means of the control device (26), which is formed to request a user of the avalanche airbag system (10) to recharge at least one of the energy storages (24, 40) and/or to replace at least one of the energy storages (22) after elapse of a predetermined period of time.

11. The avalanche airbag system according to any one of claims 1 to 10,
**characterized in that**
at least one of the energy storages (22, 40, 24) comprises at least two separate energy storage units removable from the avalanche airbag system (10), the respective nominal capacity of which is dimensioned such that the airbag (14) can be filled at least once by using the electrical energy of the respective energy storage unit, in particular at an ambient temperature of down to -30 degrees Celsius.

12. The avalanche airbag system according to any one of claims 1 to 11,
**characterized by**
an actuating device (36), by means of which the filling device (20) can be brought into a triggered state, in which the filling device (20) introduces ambient air into the airbag (14).

13. A carrying device, in particular backpack (12), with an avalanche airbag system (10) according to any one of claims 1 to 12.

14. A method for operating an avalanche airbag system (10), which includes at least one airbag (14) and a filling device (20), by means of which ambient air is introduced into the airbag (14), wherein the filling device (20) includes at least one fan (16) with an electric motor (18), a first electrical energy storage (22, 40) for supplying the electric motor (18) with electrical energy to effect the inflation of the airbag (14) with ambient air, a second electrical energy storage (24) and a control device (26), which controls the electric motor (18), **characterized in that**
depending on at least one parameter, it is determined by means of the control device (26) if the electric motor (18), upon being controlled, is supplied with electrical energy originating from both energy storages (22, 40, 24) together or with electrical energy originating only from one of the two energy storages (22, 40, 24) alone for filling the airbag (14) with the ambient air.

## Revendications

1. Système de coussin gonflable de sécurité en cas d'avalanche comportant au moins un coussin gonflable (14) et un dispositif de remplissage (20) pour introduire de l'air ambiant dans le coussin gonflable (14), dans lequel le dispositif de remplissage (20) comporte au moins un ventilateur (16) avec un moteur électrique (18), un premier dispositif de stockage d'énergie électrique (22, 40) pour alimenter le moteur électrique (18) en énergie électrique pour provoquer le gonflage du coussin gonflable (14) avec de l'air ambiant, un second dispositif de stockage d'énergie électrique (24) et un dispositif de commande (26) pour la commande du moteur électrique (18),
**caractérisé en ce que**
au moyen du dispositif de commande (26) en fonction d'au moins un paramètre lors du remplissage du coussin gonflable (14) avec de l'air ambiant non seulement une alimentation du moteur électrique (18) en énergie électrique provenant des deux dispositifs de stockage d'énergie (40, 24) ensemble mais aussi en énergie électrique provenant seulement d'un des deux dispositifs de stockage d'énergie (22, 40, 24) peut être effectuée.

2. Système de coussin gonflable de sécurité en cas d'avalanche selon la revendication 1,
**caractérisé en ce que**
le dispositif de commande (26) est adapté pour provoquer l'alimentation du moteur électrique (18) en énergie électrique provenant des deux dispositifs de stockage d'énergie (22, 40, 24) en fonction d'une mise en marche du moteur électrique (18).

3. Système de coussin gonflable de sécurité en cas d'avalanche selon la revendication 1 ou 2,
**caractérisé en ce que**
le dispositif de commande (26) est adapté pour provoquer l'alimentation du moteur électrique (18) en énergie électrique provenant des deux dispositifs de stockage d'énergie (22, 40, 24) en fonction d'un dépassement d'un seuil prédéterminé d'une puissance à produire par le moteur électrique (18) lors du remplissage du coussin gonflable (14).

4. Système de coussin gonflable de sécurité en cas d'avalanche selon l'une quelconque des revendications 1 à 3,
**caractérisé en ce que**
au moins un des deux dispositifs de stockage d'énergie (22) est conçu comme une batterie non-rechargeable.

5. Système de coussin gonflable de sécurité en cas d'avalanche selon l'une quelconque des revendications 1 à 4,
**caractérisé en ce que**
le premier dispositif de stockage d'énergie (22, 40) sert à alimenter le dispositif de commande (26) et/ou autres composants électroniques en énergie électrique et/ou est conçu pour une compensation au moins partielle d'une auto-décharge du second dispositif de stockage d'énergie (24).

6. Système de coussin gonflable de sécurité en cas d'avalanche selon l'une quelconque des revendications 1 à 5,
**caractérisé en ce que**
le second dispositif de stockage d'énergie (24) est conçu comme un condensateur, surtout comme un supercondensateur.

7. Système de coussin gonflable de sécurité en cas d'avalanche selon la revendication 6,
**caractérisé en ce que**
le dispositif de commande (26) est adapté pour provoquer une charge du condensateur (24) avec de l'énergie électrique provenant du premier dispositif de stockage d'énergie (22, 40) et/ou une introduction de l'énergie électrique du condensateur (24) dans le premier dispositif de stockage d'énergie (40).

8. Système de coussin gonflable de sécurité en cas d'avalanche selon la revendication 7,
**caractérisé en ce que**
le dispositif de commande (26) est adapté pour provoquer la charge du condensateur (24) avec de l'énergie électrique provenant du premier dispositif de stockage d'énergie (22, 40) en fonction d'une température et/ou en fonction d'une activation d'un mode de veille du dispositif de remplissage (20).

9. Système de coussin gonflable de sécurité en cas d'avalanche selon l'une quelconque des revendications 6 à 8,
**caractérisé en ce que**
le condensateur (24) est agencé sur une carte de circuits imprimés et est fixé dans sa position au moyen d'une masse de scellement.

10. Système de coussin gonflable de sécurité en cas d'avalanche selon l'une quelconque des revendications 1 à 9,
**caractérisé par**
un dispositif d'avertissement qui peut être commandé au moyen du dispositif de commande (26), ledit dispositif d'avertissement étant adapté pour inviter un utilisateur du système de coussin gonflable de sécurité en cas d'avalanche (10) après écoulement d'une période de temps prédéterminée à recharger au moins un dispositif de stockage d'énergie (24, 40) et/ou à remplacer au moins un des dispositifs de stockage d'énergie (22).

11. Système de coussin gonflable de sécurité en cas d'avalanche selon l'une quelconque des revendications 1 à 10,
**caractérisé en ce que**
au moins un des dispositifs de stockage d'énergie (22, 40, 24) comporte au moins deux unités de stockage d'énergie séparées et pouvant être retirées du système de coussin gonflable de sécurité en cas d'avalanche (10) dont la capacité nominale respective est dimensionnée de telle façon que par l'utilisation de l'énergie électrique de l'unité de stockage d'énergie respective le coussin gonflable (14), surtout dans le cas d'une température ambiante allant jusqu'à -30 degrés Celsius, puisse être rempli au moins une fois.

12. Système de coussin gonflable de sécurité en cas d'avalanche selon l'une quelconque des revendications 1 à 11,
**caractérisé par**
un moyen d'actionnement (36) au moyen duquel le dispositif de remplissage (20) peut être mis dans un état déclenché dans lequel le dispositif de remplissage (20) introduit de l'air ambiant dans le coussin gonflable (14).

13. Dispositif de transport, surtout un sac à dos (12), avec un système de coussin gonflable de sécurité en cas d'avalanche (10) selon l'une quelconque des revendications 1 à 12.

14. Procédé de fonctionnement d'un système de coussin gonflable de sécurité en cas d'avalanche (10) comportant au moins un coussin gonflable (14) et un dispositif de remplissage (20) au moyen duquel de l'air ambiant est introduit dans le coussin gonflable (14), dans lequel le dispositif de remplissage (20) comporte au moins un ventilateur (16) avec un moteur électrique (18), un premier dispositif de stockage d'énergie électrique (22, 40) pour alimenter le moteur électrique (18) en énergie électrique pour provoquer le gonflage du coussin gonflable (14) avec de l'air ambiant, un second dispositif de stockage d'énergie électrique (24) et un dispositif de commande (26) qui commande le moteur électrique (18),
**caractérisé en ce que**
au moyen du dispositif de commande (26) il est déterminé en fonction d'au moins un paramètre si pour le remplissage du coussin gonflable (14) avec de l'air ambiant le moteur électrique (18) lors de la commande est alimenté en énergie provenant des deux dispositifs de stockages d'énergie (22,40, 24) ensemble ou en énergie électrique provenant seulement d'un des deux dispositifs de stockages d'énergie (22, 40, 24).
